# EUROPÄISCHE PATENTSCHRIFT

(11) **EP 3 571 482 B1**
(45) Veröffentlichungstag und Bekanntmachung des Hinweises auf die Patenterteilung: **11.01.2023**
(21) Anmeldenummer: 18703691.8
(22) Anmeldetag: 18.01.2018
(51) Int. Cl.: G01J 5/08, G01J 5/12, H04N 5/33, H04N 5/378

(54) **HOCHAUFLÖSENDES THERMOPILE INFRAROT SENSORARRAY**
HIGH-RESOLUTION THERMOPILE INFRARED SENSOR ARRAY
RÉSEAU DE CAPTEURS INFRAROUGES À THERMOPILE À HAUTE RÉSOLUTION

(30) Priorität: 18.01.2017 DE 102017100910; 13.02.2017 DE 102017102833
(43) Veröffentlichungstag der Anmeldung: 27.11.2019
(73) Patentinhaber: Heimann Sensor GmbH, 01109 Dresden (DE)
(72) Erfinder: SCHIEFERDECKER, Jörg, 01157 Dresden (DE); FORG, Bodo, 55131 Mainz (DE); SCHNORR, Michael, 65510 Hünstetten-Wallbach (DE); STORCK, Karlheinz, 65391 Lorch am Rhein (DE); LENEKE, Wilhelm, 65232 Taunusstein (DE); SIMON, Marion, 65307 Bad Schwalbach (DE)
(74) Vertreter: Lippert Stachow Patentanwälte Rechtsanwälte Partnerschaft mbB
(86) Internationale Anmeldenummer: PCT/EP2018/051166
(87) Internationale Veröffentlichungsnummer: WO 2018/134288

(56) Entgegenhaltungen:
- DE-A1-102010 042 108
- V. KASSOVSKI ET AL: "Miniaturized 4x16 Thermopile Array Sensor with Integrated on Signal Conditioning on Chip", PROCEEDINGS IRS 2011, 1. Januar 2011 (2011-01-01), Seite 57, XP055300518, N?rnberg DOI: 10.5162/irs11/i2.5
- M. SCHNORR ET AL: "New miniaturized Thermopile IR Arrays with medium resolution", PROCEEDINGS IRS2 2015, 1. Januar 2015 (2015-01-01), Seiten 957-960, XP055467110, DOI: 10.5162/irs2015/4.4 ISBN: 978-3-9813484-8-4
- KIMATA MASAFUMI: "Trends in small-format infrared array sensors", 2013 IEEE SENSORS, IEEE, 3. November 2013 (2013-11-03), Seiten 1-4, XP032532475, ISSN: 1930-0395, DOI: 10.1109/ICSENS.2013.6688495 [gefunden am 2013-12-18]

## Beschreibung

Die Erfindung betrifft ein hochauflösendes Thermopile Infrarot Sensorarray mit mindestens 16 Zeilen und mindestens 16 Spalten und monolithisch integrierter Signalverarbeitung auf einem Sensorchip mit mehreren parallelen Signalverarbeitungskanälen für die Signale des Sensorarrays, sowie einem Digitalport zur seriellen Ausgabe der Signale der Pixel.

Um ein hochauflösendes Infrarot Thermopile Sensorarray aufzubauen, müssen die Zahl der einzelnen Thermopile Elemente, d.h. die Anzahl der Pixel, steigen und die geometrischen Anmessungen der Pixel selbst sinken. Die ursprünglich auf dem Markt erhältlichen Thermopile Sensorarrays wiesen nur wenige Pixel auf (z.B. 8x8 Pixel oder 16x16 Pixel), wobei die einzelnen Pixel recht groß waren (z.B. 150...300 µm × 150...300 µm). Damit war auf dem Sensorchip (z.B. aus Silizium) ausreichend Platz, um einige wenige Verstärker oder Tiefpässe auf dem Chip neben dem Thermopile Sensorarray unterzubringen.

Derzeit übliche Thermopile Sensorarrays mit größeren Pixelzahlen erfordern eine Reduzierung der Abmessungen der Pixel auf eine Seitenlänge von 100 µm, oder sogar bis herab zu 25pm. Die durch die steigende Integrationsdichte kleineren Pixel haben aber den Nachteil, dass diese ein flächenproportional kleineres Signal erzeugen. Das bedeutet, dass bei einer halben Pixelgröße nur noch ein Viertel der Signalstärke für die Weiterverarbeitung zur Verfügung steht.

Die somit immer niedrigeren Signalspannungen, die meist im nV-Bereich bis zu wenigen µV liegen, erfordern immer größere Verstärkungsfaktoren, damit Signale ohne zusätzliches Rauschen oder sonstige Störeinflüsse außerhalb des eigentlichen Sensorgehäuses weiter verarbeitet werden können. Die Folge ist allerdings ein immer geringerer Signal-Rausch-Abstand.

Die durch die niedrigen Signalspannungen notwendige Signalverstärkung liegt mindestens bei einigen 1000, meist sogar über 10.000, um die Signalspannung soweit anzuheben, dass sie an andere Baugruppen weiter gegeben und weiter verarbeitet werden kann. Die zur Signalverstärkung klassischerweise verwendeten Analogverstärker mit großer Verstärkung benötigen mehrstufige Verstärker mit relativ großem Flächenbedarf und darüber hinaus weisen diese Verstärker einen beträchtlichen Stromverbrauch auf. Das bedeutet, dass die Verlustleistung und damit gleichzeitig die Eigenerwärmung ansteigen, was wiederum zu einer Vergrößerung des Messfehlers des Thermopile Sensorarrays insgesamt führt.

Mittlerweile sind Infrarot-Thermopile Sensorarrays, die mittels Silizium-Mikromechanik auf einem Chip hergestellt werden, in unterschiedlichen Ausführungsformen bekannt geworden. Bei diesen Sensorarrays findet ein Teil der Signalverarbeitung auf dem Chip statt, aber es sind nur wenige Vorverstärker und ein gemeinsamer Multiplexer vorhanden, der die Signale sämtlicher Pixel ausgibt. Die Thermopiles haben sogenannte "heiße" Kontakte auf einer zunehmend kleiner werdenden Infrarot Empfangsfläche und sogenannte "kalte" Kontakte auf einer Wärmesenke am Rand des jeweiligen Pixels. Die vom Thermopile erzeugte Signalspannung hängt unmittelbar von der erreichbaren Temperaturdifferenz zwischen den "heißen" und "kalten" Kontakten ab.

Beispielsweise sind bei einem Thermopile Sensorarray gemäß der WO 2006/122529 A1 pro Zeile des Sensorarrays jeweils ein Vorverstärker und ein Tiefpass auf dem Chip integriert. Für hochauflösende Sensorarrays mit vielen Zeilen und Spalten ist das jedoch nicht ausreichend. Beispielsweise werden bei einem Array von 64x64 Pixeln nur 64 Vorverstärker und 64 Tiefpässe verwendet. Die erzielbare Rauschbandbreite wäre bis zu 64-fach höher als nötig. Da aber das Rauschen mit der Wurzel der Rauschbandbreite ansteigt, könnte das Rauschen um bis zu 8-fach reduziert, oder das thermische Auflösungsvermögen um bis zu 8-fach verbessert werden.

Allerdings werden keine Maßnahmen für eine strom- und platzsparende Lösung für die Signalverstärkung pro Signalkanal angegeben.

Weiterhin geht aus der JP 2004-170375 A ein Thermopile Sensorarray hervor, das nur einen einzigen Vorverstärker aufweist.

In der DE 103 22 860 B4 wird eine Schaltungsanordnung zum Auslesen von elektronischen Signalen aus hochauflösenden thermischen Sensoren mit Vorverstärkern beschrieben, die sich vor einem Multiplexer befinden. Um die erhebliche Verlustleistung der einzelnen parallel arbeitenden Vorverstärker zu reduzieren, werden diese zur Stromeinsparung zyklisch abgeschaltet.

Genau durch diese Maßnahme wird jedoch die gewünschte hohe Temperaturauflösung nicht erreicht, weil die Vorverstärker vor dem Multiplexer nur dann das erwartete Ergebnis bringen können, wenn gleichzeitig die Rauschbandbreite des abgetasteten Signals proportional zur Zahl der parallelen Verstärkerkanäle reduziert wird. Das ist aber nicht möglich, wenn das verstärkte Signal über die Vorverstärker nicht kontinuierlich mittels Tiefpass zur Rauschbandbreitenbegrenzung "integriert", oder z.B. über einen Tiefpass, geglättet wird.

Aus der EP 2 587 234 A1 geht ein Thermopile Infrarotsensor mit einer Schaltung zur Signalverarbeitung hervor, bei der die Signale der einzelnen Pixel ohne Bandbegrenzung, oder zwischengeschaltete Vorverstärker, weiter geleitet werden.

In sämtlichen vorstehenden Lösungen werden Thermopile Infrarot Sensorarrays beschrieben, ohne jedoch Maßnahmen zur Signalverarbeitung bei höherer Integrationsdichte auf dem Chip vorzuschlagen. Insbesondere gibt es keine Vorschläge zur Verringerung der Rauschbandbereite bei gleichzeitig geringstem Platzbedarf und geringster Verlustleistung.

Die bekannten Lösungen weisen ein unzureichendes thermisches Auflösungsvermögen auf, weil nur ein einziger oder nur sehr wenige Vorverstärkerkanäle auf dem Sensorchip integriert worden sind, was zu einer hohen Rauschbandbreite und gleichzeitig zu einem schlechten Signal/Rausch-Abstand führt.

Eine hohe Integrationsdichte erfordert, die Pixelgröße und den sogenannten Pixel Pitch, d.h. den Mittenabstand der Thermopile Pixel, zu verringern, um dadurch mehr Pixel auf gleicher Chipfläche unterzubringen. Zusätzlich sind neben einer hohen geometrischen Auflösung auch eine hohe thermische Auflösung, d.h. ein großer Signal/Rausch/Abstand- und eine niedrige rauschbegrenzte Temperaturauflösung NETD (Noise Equivalent Temperature Difference), wünschenswert.

Wegen der kleineren Empfangsfläche und wegen des dadurch bedingten geringen Abstandes zwischen den "heißen" und "kalten" Kontakten der Thermopile Pixel führt eine Verringerung der Pixelgröße gleichzeitig auch zu einer Verringerung des vom Thermopile Pixel abgegebenen Sensorsignals, was zu einem geringeren Signal/Rausch-Abstand, schlechterem thermischen Auflösungsvermögen und zu einer verringerten Messgenauigkeit führt.

Prinzipiell ist es möglich, Thermopilezellen (Thermopile Pixel) in ihrer Größe zu verringern und immer größere Pixelzahlen auf dem Sensorchip zu integrieren. Beispielsweise werden 16×16, 32×32, 64×64, 128×128 Thermopile Pixel oder mehr auf einem Sensorchip realisiert. Die Signalspannungen der einzelnen Thermopile Pixel wären über eine m x n-Adressierung und MUX Schalter zu multiplexen, d.h. auf eine gemeinsame, serielle Signalleitung zu einem Verstärker pro Array, oder über eine gemeinsame serielle Schnittstelle pro Zeile oder Spalte, zu führen.

Da die minimal noch aufzulösenden Signale von Thermopile Pixeln mit weiter verringerter Pixelabmessung bei vielen Anwendungen noch im nV Bereich liegen, müssen die Signale bereits auf dem Chip ausreichend hoch verstärkt und weiter bearbeitet werden, so dass sie von elektrischen Störeinflüssen außer- und innerhalb des Sensorchips nicht beeinflusst werden können.

Verstärkungsfaktoren von typisch 10.000 oder mehr sind bei den bekannten Lösungen erforderlich, um die Sensorsignale solch kleiner Thermopile Pixel auf einige mV zu verstärken, damit die Sensorsignale nach dem MUX (Multiplexer) auf einem schnellen seriellen Analogausgang aus dem Sensorchip ausgegeben - oder von einem auf oder direkt neben dem Sensorchip integrierten schnellen AD-Wandler in Digitalsignale umgewandelt werden können.

Der Nachteil hierbei ist, dass die Bandbreite dieser nach dem Multiplexer liegenden Vorverstärker sehr hoch sein muss, um die Sensorsignale vieler, nacheinander abgetasteter Thermopile Pixel immer noch mit Bildfrequenzen von mehreren Hz bis zu mehreren 10 Hz zu übertragen.

Hierzu ist mindestens das m x n-fache der Bildfrequenz (sogenannte Frame Rate) bei einem Vorverstärker pro Array, oder das m-fache der Bildfrequenz für ein Array mit m Spalten und je einem Vorverstärker pro Spalte, erforderlich. Mit der Wurzel der (Rausch-) Bandbreite steigt aber gleichzeitig auch das Rauschen des Systems an und die Temperaturauflösung NETD verschlechtert sich.

Stabil und genau arbeitende Verstärker mit großer Verstärkung erfordern mehrere Verstärkerstufen, benötigen relativ viel Platz auf dem Sensorchip und weisen außerdem einen erheblichen Stromverbrauch mit entsprechend großer Abwärme auf, die wiederum die erreichbare Signalspannung der Thermopileelemente weiter verringert.

Aus diesem Grund ist es nicht möglich, auf dem eng begrenzten Raum eines Sensorchips viele solcher großen Verstärker neben den Pixeln unterzubringen.

In Kassovski ET AL: "Miniaturized 4×16 Thermopile Sensor with Integrated on Signal Conditioning on Chip", Proceedings IRS 2011, Seite 57, XP055300518 wird ein Zeilen-Array mit 4 Zeilen zu je 16 Elementen also insgesamt 64 Pixel pro Zeile beschrieben. Bei diesem Thermopile Sensor sind 64 Signalverarbeitungskanäle für 64 Pixel vorgesehen, also pro Pixel ein Signalverarbeitungskanal, wobei jeder Pixel 80 Kontakt Temperatursensoren enthält.

Jeder Signalverarbeitungskanal umfasst einen rauscharmen Verstärker mit unbekannter Verstärkung, einen 16 Bit Delta/Sigma A/D Wandler 2. Ordnung und einen digitalen Tiefpassfilter, wobei die Signalverarbeitung auf dem gleichen Chip erfolgt. Die Zwischenspeicherung der Messwerte erfolgt in einem RAM auf dem gleichen Chip.

Da dieses kleine 64 Element-Array nur 4 Zeilen und einen Zeilenabstand von 220 µm aufweist, lassen sich recht einfach beiderseits der Pixel je zwei Signalverarbeitungskanäle unterbringen. Bereits bei einem zweidimensionalen Array mit 16 Zeilen müssten dann schon je 8 Signalverarbeitungskanäle zu jeder Seite untergebracht werden, bei 64 Zeilen entsprechend je 32 statt je zwei Kanäle. Damit würde für zweidimensionale Arrays mit sehr vielen Elementen ein sehr großflächiges Chip mit hohen Kosten entstehen. Es fehlen auch Angaben, wie für Arrays mit viel größerer Pixelzahl und sehr kleinem Pixelabstand von < 200 µm oder bevorzugt < 100 µm die Signale von so vielen Pixeln parallel verarbeitet und zum Signalausgang geführt werden können.

Das Zeilen Array verbraucht außerdem bei einer Betriebsspannung von 3 V einen Strom von 4 mA, das bedeutet, dass eine Verlustleistung von 12 mW erzeugt wird, die bei kleinen Thermopile Infrarot Sensorarrays noch vertretbar wäre. Bei größeren Sensorarrays mit größeren Pixelzahlen würde das jedoch ganz anders aussehen, weil dann beim Auslesen eines solchen Arrays bei gleichem Strombedarf von 4 mA eine viel zu große elektrische Verlustleistung entstehen würde.

Äquivalent und Pixelproportional würde sich bei einem 64x64 Sensorarray mit 64 mal mehr Signalverarbeitungskanälen ein Stromverbrauch von fast 250 mA, d.h. eine Verlustleistung von 0,75 W und bei einem 128×128 Sensorarray ein Stromverbrauch von fast 1 A bei einer Verlustleistung von 3 W ergeben.

Derart hohe Verlustleistungen zeigen jedoch folgende Nachteile bei Thermopile Infrarot Sensorarrays:
Soll eine derart hohe Verlustleistung auf dem gleichen Sensorchip monolithisch integriert werden, führt das zur Eigenerwärmung des Sensorchips und insbesondere nach dem Einschalten zu einer Art Wärmeschock der empfindlichen Thermopile Elemente. Die Folge sind eine geringere Messgenauigkeit der thermischen Thermopile Elemente und eine kurze Lebensdauer der Batterie bei portablen Geräten.

In der WO 2017/059 970 A1 geht ein hochauflösendes Thermopile Infrarot Sensorarray mit monolithisch integrierter Signalverarbeitung hervor, bei dem die vom Sensorarray erzeugten Signale jedes Signalverarbeitungskanales über Vorverstärker und einem nachgeschalteten Analog/Digital-Wandler in einem Speicher zwischengespeichert werden. Die Auswahl des jeweiligen Signalverarbeitungskanales erfolgt mittels eines Signalmultiplexers.

Aus der US 9 270 895 B2 geht ein Verfahren und eine Vorrichtung zur hochdynamischen Bilderzeugung, insbesondere zur Erzeugung einer digitalen Abbildung einer Szene mit einer zweidimensionalen Matrix von IR-Sensoren, hervor. Dazu sind jedem Pixel ein Analog/Digital-Wandler und ein m-Bit Zähler zugeordnet.

Die US 2006 / 0 243 885 A1 bezieht sich auf einen Bildsensor und ein Verfahren zur Steuerung desselben, wobei die Aufgabe darin besteht, einen verbesserten Bildsensor mit kleinen Abmessungen zu schaffen, bei dem das Lichtaufnahmearray und die A/D-Wandler auf einem Chip angeordnet sind. Es soll eine Hochgeschwindigkeitssteuerung realisiert werden. Dazu ist das Bildsensorarray in eine Vielzahl von Subarrays aufgeteilt, die jeweils einem A/D-Wandler mit zugehörigem Subarray-Controller zugeordnet sind.

Die US 8 179 296 B2 bezieht sich auf ein Verfahren und eine Vorrichtung zum digitalen Auslesen eines Sensorarrays, das mit dem Eingang eines A/D-Wandler-Arrays verbunden ist. Das Analog/Digital Array kann für IR-Bildsensoranwendungen mit hoher Flächenauflösung (kleine Pixel) und hohem Signal-Rausch-Verhältnis eingesetzt werden.

In der JP 2004- 170 375 A wird ein Thermopile Array Sensor beschrieben, bei dem das weiße Rauschen, verursacht durch Umgebungstemperaturänderungen und das 1/f Rauschen des DC Verstärkers, beseitigt werden soll. Das erfolgt mittels eines abgeschirmten Kompensations-Thermopiles pro Zeile des Arrays. Zur Signalverarbeitung dient ein OPV, der die Differenz aus Mess- und Kompensationssignal verarbeitet.

Die WO 2006/ 122 529 A2 betrifft ein Thermopile Infrarot Sensorarray, bei dem die Membran unter jedem Thermopile Sensorelement freigeätzt ist und bei dem mindestens für jede vierte, vorzugsweise für jede Spalte oder Zeile von Sensorelementen jeweils Vorverstärker mit Tiefpass vorgesehen sind.

Die EP 2 587 234 A1 betrifft einen IR Sensor zur Unterdrückung von Änderungen des Signal/Rausch-Verhältnisses infolge der Erwärmung des Chips, indem der kalte Kontakt erwärmt wird. Andererseits führt auch Wärmestrahlung oder Wärmeleitung durch das Gasmedium zu einer Erwärmung des heißen Kontakts. Zu jedem IR Detektor im Array gehört ein MOS Transistor als Pixelauswahlschalter, sowie eine Vielzahl von vertikalen Leseleitungen und horizontalen Signalleitungen. Durch eine Kombination von Reihen- und Parallelschaltung von Thermopiles lässt sich das Signal/Rausch-Verhältnis verbessern, wobei das Ausgangssignal von jedem Thermopixel verwertet wird.

Schließlich bezieht sich die DE 103 22 860 B4 auf eine Schaltungsanordnung zum Auslesen elektronischer Signale aus hochauflösenden thermischen Sensoren, bei dem die Signale aus einer Vielzahl von Sensorelementen jeweils mittels eines Multiplexers über eine oder einige wenige Datenleitungen seriell ausgelesen werden und zwischen jedem einzelnen thermischen Sensorelement und dem Multiplexer jeweils ein Verstärker geschaltet ist. Zur Verringerung der Wärmelast könne die Verstärker zyklisch ein- und ausgeschaltet werden.

M. SCHNORR ET AL.: "New miniaturized Thermopile IR Arrays with medium Resolution", PROCEEDINGS IRS2 2015, 1. Januar 2015, Seiten 957-960, XP055467110 befasst sich mit Thermopile Infrarot Sensorarrays mit mittlerer Auflösung bis 32x32 Pixeln in einem TO Gehäuse, wobei Maßnahmen zur Energieeinsparung nicht beschrieben werden.

DE 10 2010 042108 A1 betrifft einen thermischen Infrarot Sensor mit einem hohen thermischen Auflösungsvermögen und einer hohen Ansprechgeschwindigkeit, wobei die zum Betrieb des Sensor Arrays erforderlichen elektronischen Baugruppen außerhalb des optisch aktiven Bereiches angeordnet sind, so dass die entstehende Verlustwärme besser abgeführt werden kann. Maßnahmen zur Energieeinsparung werden hier nicht beschrieben.

KIMATA MASAFUMI: "Trends in small-format array sensors", 2013 IEEE, 3. November 2013, Seiten 1-4, XP032532475 beschreibt insbesondere ungekühlte Infrarot Sensorarrays mit einem Pixel-Pitch von mehr als 200 µm.

Der Erfindung liegt die Aufgabe zugrunde, ein hochauflösendes Thermopile Infrarot Sensorarray mit besonders hoher Pixelzahl zu schaffen, das bei hoher Signalauflösung einen geringst möglichen Stromverbrauch und somit geringst möglicher Verlustleistung aufweist.

Erreicht wird das bei einem hochauflösenden Thermopile Infrarot Sensorarray gemäß Anspruch 1 mit mindestens 16 Zeilen und 16 Spalten und monolithisch integrierter Signalverarbeitung auf einem Sensorchip, mit mehreren parallelen Signalverarbeitungskanälen für die Signale des Sensorarrays, sowie einem Digitalport zur seriellen Ausgabe der der Signale der Pixel, wobei jeder Signalverarbeitungskanal mindestens einen integrierenden Analog/Digital-Wandler aufweist, in dem ein Tiefpassfilter integriert ist, wobei für jeden Signalverarbeitungskanal ein Speicherbereich in einem Speicher zur Speicherung der Ergebnisse der Analog/Digital-Wandler vorhanden ist, wobei sich bei dem Sensorarray höchstens 16 Pixel einen Signalverarbeitungskanal teilen, wobei die Anzahl der Signalverarbeitungskanäle mindestens dem 4-fachen der Anzahl der Zeilen entspricht, wobei ein Teil der Signalverarbeitungskanäle jeweils im Zwischenraum zwischen den Pixeln und ein weiterer Teil der Signalverarbeitungskanäle zusammen mit weiterer Elektronik in dem das Sensorarray umgebenden äußeren Randbereich des Sensorchips oder unter demselben Sensorchip angeordnet ist, wobei für jeden Signalverarbeitungskanal mit einer Anzahl a von Pixeln von a > 1 ein Signalmultiplexer zur Auswahl der dem Signalverarbeitungskanal zugeordneten Pixel des Sensorarrays vorhanden ist, wobei jedem Analog/DigitalWandler ein Vorverstärker mit einem Verstärkungsfaktor mit weniger als 500-fach vorgeschaltet ist, wobei der Vorverstärker ein Auto-Zero oder switched Chopper Verstärker ist, wobei der Analog/Digital-Wandler eine Auflösung von mindestens 10 Bit besitzt und mit einer Wandelrate von 15 - 60 Hz arbeitet, wobei die Tiefpassfilter zur Begrenzung der Rauschbandbreite mit einer Grenzfrequenz arbeiten, die höchstens dem achtfachen Betrag des Produktes aus Bildrate des Sensorarrays und der Anzahl a der Pixel pro Signalverarbeitungskanal entspricht und wobei der Mittenabstand der Pixel kleiner als 100 µm beträgt.

Der Analog/Digital-Wandler arbeitet nach dem Charge Balancing oder Delta-Sigma Verfahren.

In einer weiteren Fortführung der Erfindung enthält jeder Signalverarbeitungskanal einen Tiefpassfilter zur Begrenzung der Rauschbandbreite, dessen Grenzfrequenz mindestens das Produkt aus der Bildrate des Thermopile Infrarot Sensorarray und der Anzahl der Pixel pro Signalverarbeitungskanal bevorzugt weniger als dem dreifachen Betrag des Produktes entspricht.

Ein Teil der Signalverarbeitungskanäle ist unterhalb des Sensorchips mit den Sensorelementen auf einem separaten Chip angeordnet, wobei der Thermopile Infrarot Sensorchip und der separate Chip fest miteinander verbunden sind.

Die Erfindung wird nachfolgend an Ausführungsbeispielen näher erläutert. In den zugehörigen Zeichnungsfiguren zeigen
- Fig. 1:: den prinzipiellen Aufbau eines erfindungsgemäßen Thermopile Infrarot Sensorarrays;
- Fig. 2:: ein Blockschaltbild einer erfindungsgemäßen Schaltungsanordnung zur integrierten Signalverarbeitung für Thermopile Infrarot Array Sensorchips mit Tiefpassfilter und je einem Signalverarbeitungskanal pro Pixel;
- Fig. 3:: ein Blockschaltbild einer erfindungsgemäßen Schaltungsanordnung für die integrierte Signalverarbeitung für Thermopile Infrarot Array Sensorchips in einer zweiten Ausführungsform, bei der die Tiefpassfunktion in einem integrierten ADC (AD-Wandler) erfolgt;
- Fig. 4:: ein Blockschaltbild einer erfindungsgemäßen Schaltungsanordnung zur integrierten Signalverarbeitung für Thermopile Infrarot Array Chips in einer dritten Ausführungsform, bei der sich mehrere Pixel einen Signalverarbeitungskanal teilen, mit
- Fig. 4a:: Tiefpassfilter nach dem Vorverstärker und
- Fig. 4b:: einem integrierenden AD-Wandler, der die Tiefpassfunktion übernimmt;
- Fig. 5:: ein Blockschaltbild einer weiteren erfindungsgemäßen Schaltungsanordnung für die integrierte Signalverarbeitung für Thermopile Infrarot Sensorarrays, bei der die Tiefpassfunktion in einem integrierenden AD-Wandler erfolgt;
- Fig. 6a:: eine schematische Schnittdarstellung eines Sensorchips mit Durchkontaktierungen und einem unter diesem angeordneten separaten Chip mit in diesem integrierten Signalverarbeitungskanälen und weiterer Speicher- und Signalverarbeitungs-Elektronik; und
- Fig. 6b:: die Anordnung nach Fig. 6a, jedoch ergänzt mit einem Abdeckwafer mit einem Strahlungseintrittsfenster und zusätzlichen elektrischen Verbindungsmitteln, wie Bonddrähten zur Verbindung mit weiteren Funktionsbaugruppen zum Betrieb des Thermopile Infrarot Sensorarrays.

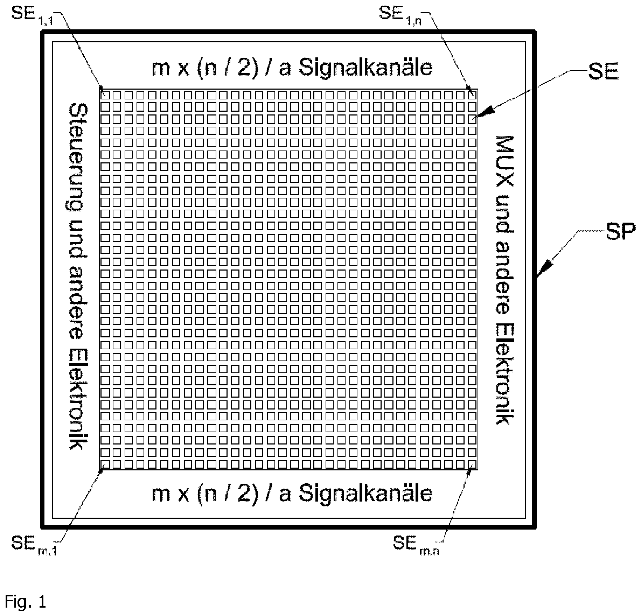

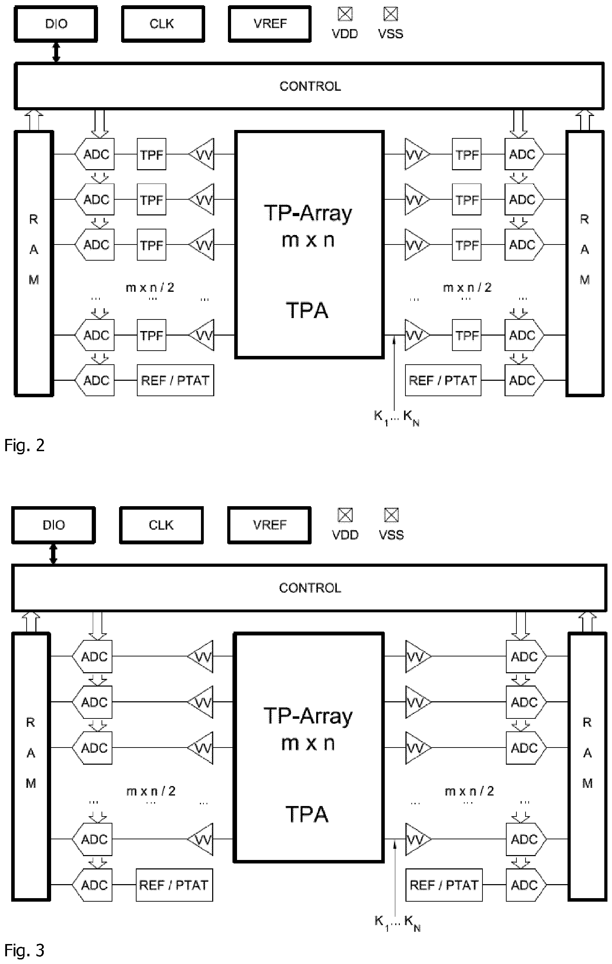

Aus Fig. 1, 2 ist der grundsätzliche Aufbau eines erfindungsgemäßen Thermopile Infrarot Sensorarrays mit einem im Zentrum des Sensorchips angeordneten Thermopile Infrarot Sensorarray TPA in Matrixform mit m × n Pixeln SE 1.1 ... SE 1.n × SE m1.1 ...SE m, n ersichtlich. Um die Pixel SE bzw. um das Pixelfeld herum befinden sich bevorzugt auf zwei Seiten m × (n/2) / a Signalverarbeitungskanäle K₁...K_{N} auf dem gleichen Sensorchip SP, welche die Signale der einzelnen Pixels SE verstärken, filtern und in digitale Signale umwandeln. Jeweils eine Anzahl von a Pixeln teilt sich hier einen Signalverarbeitungskanal K₁...K_{N}.

Prinzipiell können auch sämtliche Signalverarbeitungskanäle K₁...K_{N} auf einer Seite des Pixelfeldes liegen, wobei das Thermopile Infrarot Sensorarray dann eine asymmetrische Wärmeverteilung aufweist.

Wesentlich für die Funktion von Thermopiles ist, dass diese "heiße" und "kalte" Kontakte aufweisen, die über möglichst lange Leitbahnen miteinander verbunden sind, d.h. möglichst weit voneinander entfernt angeordnet sind und wobei die "heißen" Kontakte auf einem Strahlungsempfänger (nicht dargestellt) und die "kalten" Kontakte auf einer Wärmesenke am Rand des Pixels SE angeordnet sind, um eine auswertbare Signalspannung in Abhängigkeit vom Temperaturunterschied zwischen den "heißen" und "kalten" Kontakten zu erzeugen.

Jedes Pixel SE des Thermopile Infrarot Sensorarrays TPA enthält eine an sich bekannte miniaturisierte Thermopilezelle und über jeder Thermopilezelle optional ein Strahlungseintrittsfenster mit einer geeigneten Optik. Die einzelnen Thermopilezellen haben einen Mittenabstand (sogenanntes Pixel Pitch) von weniger als 200 µm. Je geringer der Pixel Pitch, desto kleiner wird das gesamte Thermopile Infrarot Sensorarray Chip und auch die Dimension der erforderlichen Optik zur Abbildung der Infrarotstrahlung auf dem Pixel SE verringert sich bei gleicher Pixelzahl. Eine Verringerung der Chip- und Optikabmessungen führt üblicherweise auch zu geringeren Fertigungskosten.

Optional erlaubt ein geringerer Pitch mehr Pixel SE auf einem Sensorchip vorgegebener Größe unterzubringen, um somit ein höheres optisches Auflösungsvermögen zu erreichen.

Beispielsweise beträgt die mit der Erfindung praktisch realisierbare Pixelgröße 90 µm bei einem 64x80 Sensorarray K₁...K_{N} und 60 µm bei einem 120x84 Sensorarray K₁...K_{N}. Das bedeutet, dass dann 32 Signalverarbeitungskanäle beidseitig des Sensorarrays K₁...K_{N} weniger als 3 µm Breite pro Kanal einnehmen.

Beim 120x84 Sensorarray K₁...K_{N} mit 60 µm Pixelgröße und je einem Signalverarbeitungskanal pro Pixel SE blieben dann noch 1,5 µm Breite für einen Signalverarbeitungskanal übrig, wenn diese parallel neben den Sensorarray TPA angeordnet sind.

Fig. 2 zeigt ein Blockschaltbild einer erfindungsgemäßen Schaltungsanordnung für die integrierte Signalverarbeitung für Thermopile Infrarot Sensorarrays TPA mit spiegelbildlichem Aufbau, mit einem zentralen Thermopile Infrarot Sensorarray TPA mit einem Vorverstärker W, einem nachgeschalteten Tiefpassfilter TPF und einem Analog/Digital-Wandler ADC je Signalverarbeitungskanal K₁...K_{N} auf zwei Seiten des Sensorarrays TPA pro Pixel SE.

Die Ausgänge der Analog/Digital-Wandler ADC sind mit einem Speicherfeld RAM verbunden, das über eine Steuerschaltung CRTL ausgelesen werden kann, so dass die digitalen Ausgangssignale an einem digitalen Eingangs- und Ausgangsport DIO zur Weiterverarbeitung zur Verfügung stehen.

Weiterhin befinden sich auf jedem Sensorchip SP die für den Betrieb nötigen Baugruppen, wie Taktgeber CLK und für die nötige Spannungsversorgung VDD, VSS und eine oder mehrere Referenzspannungen VREF oder REF/PTAT und auch zusätzliche ESD Schaltblöcke verfügen.

Erfindungsgemäß ist eine große Anzahl von individuellen Signalverarbeitungskanälen K₁...K_{N} auf oder unter demselben Sensorchip SP integriert, wobei sich eine Anzahl a von höchstens 16 oder 8 Pixel SE einen Signalverarbeitungskanal K₁...K_{N} teilt, bevorzugt teilen sich jedoch nur jeweils a = 4, 3 oder 2 Pixel SE bzw. sogar nur ein Pixel SE einen Signalverarbeitungskanal.

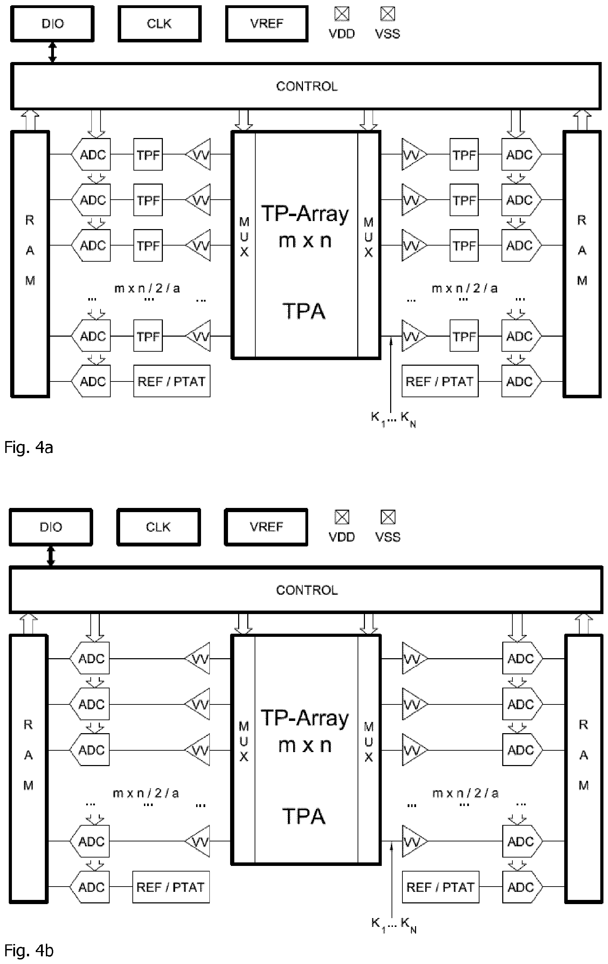

Die entsprechende Anzahl a an Pixeln SE ist über Multiplexer MUX, oder Bereiche eines Multiplexers MUX auf den jeweilig zugeordneten Signalverarbeitungskanal K₁...K_{N} geschaltet (Fig. 4a). Besonders bevorzugt besitzt jedes Pixel einen eigenen Signalverarbeitungskanal K₁...K_{N} (d.h. a = 1); siehe Fig. 3 und Fig. 4b). Dann wird die geringste Rauschbandbreite und damit das geringste Rauschen und die beste Temperaturauflösung erreicht. Außerdem kann dann auf die Multiplexer vor dem Signalverarbeitungskanal K₁...K_{N} verzichtet werden (Fig. 2).

Erfindungsgemäß ist bei einem Sensorarray TPA mit mindestens 16 Zeilen und mindestens 16 Spalten mindestens ein Pixel SE mit einem Signalverarbeitungskanal K₁...K_{N} verbunden, wobei die Anzahl der Signalverarbeitungskanäle K₁...K_{N} mindestens dem 4-fachen der Anzahl der Zeilen entspricht und wobei der Mittenabstand der Pixel SE kleiner als 200 µm beträgt.

Weiterhin ist für jeden Signalverarbeitungskanal K₁...K_{N} ein Signalmultiplexer MUX zur Auswahl der dem Signalverarbeitungskanal K₁...K_{N} zugeordneten Pixel SE des Sensorarrays TPA vorgesehen.

Dem Analog/Digital-Wandler ADC in jedem Signalverarbeitungskanal K₁...K_{N} ist ein Vorverstärker W vorgeschaltet, der einen Verstärkungsfaktor aufweist, der zwischen weniger als 500 und weniger als 100 liegt, wobei der Analog/Digital-Wandler ADC bevorzugt eine Auflösung von mindestens 10 Bit hat und arbeitet nach dem Charge Balancing oder Delta-Sigma Verfahren.

In einer weiteren Fortführung der Erfindung enthält jeder Signalverarbeitungskanal K₁...K_{N} einen Tiefpassfilter TPF zur Begrenzung der Rauschbandbreite, dessen Grenzfrequenz mindestens das Produkt aus der Bildrate des Thermopile Infrarot Sensorarrays TPA und der Anzahl der Pixel SE pro Signalverarbeitungskanal K₁...K_{N} höchstens jedoch dem achtfachen Betrag des Produktes, bevorzugt weniger als dem dreifachen Betrag des Produktes, entspricht.

Da sich aber durch mehr Signalverarbeitungskanäle K₁...K_{N} auch Platzbedarf und Verlustleistung erhöhen würde, kann es vor allem bei Sensorarrays TPA mit sehr viel Pixeln unter Berücksichtigung von thermischer Auflösung und Platzbedarf auch sinnvoll sein, a > 1 zu wählen.

Um möglichst viele Signalverarbeitungskanäle K₁...K_{N} auf dem Chip unterzubringen, muss sowohl der Flächenbedarf, als auch die Verlustleistung der einzelnen Kanäle sehr gering sein, um Chipgröße und Kosten, aber auch thermisches Übersprechen zwischen den Thermopile Pixel SE des Sensorarrays TPA gering zu halten. Derzeit werden mit der Erfindung Pixelgrößen von 90 µm, oder sogar 60 µm realisiert. Durch Fortschritte in der MEMS und CMOS Technologie könnten in den nächsten Jahren unter Nutzung der Erfindung auch Pixelgrößen von z.B. 25...50 µm erreicht werden.

Um das zu erreichen, werden Signalverarbeitungskanäle K₁...K_{N} mit jeweils nur einem kleinen rauscharmen Vorverstärker W mit einem vergleichsweise geringen Verstärkungsfaktor, d.h. kleiner 500-fach und ein langsamer stromsparender Analog/Digital-Wandler ADC mit hoher Auflösung, d.h. mit mindestens 10 Bit, eingesetzt.

Bevorzugt handelt es sich um Vorverstärker W mit einem Verstärkungsfaktor von kleiner als 100-fach und die Auflösung des Analog/Digital-Wandlers ADC sollte vorzugsweise bei 16 bis 24 Bit liegen.

Durch die Kombination eines Vorverstärkers W mit geringem Verstärkungsfaktor und eines langsamen Analog/DigitalWandlers ADC mit hoher Auflösung wird ein geringer Flächenbedarf infolge des geringen Verstärkungsfaktors gewährleistet. Außerdem wird ein geringer Stromverbrauch infolge des zwar hochauflösenden aber vergleichsweise mit geringer Übertragungsrate arbeitenden Analog/Digital-Wandler ADC sichergestellt.

Darüber hinaus ist die Verwendung eines hoch auflösenden Analog/Digital-Wandlers ADC ohne Verwendung eines Vorverstärkers W denkbar. Eine geringe Differenz der positiven und negativen Referenzspannung VREF der Analog/Digital-Wandler ADC ist vorteilhaft, weil dadurch die Temperaturauflösung vergrößert wird.

Als Vorverstärker W eignen sich z.B. sogenannte Auto-Zero (switched Chopper-) Verstärker, die sich durch geringe Offsetspannungen und Offsetspannungsdriften auszeichnen. Bei einem Verstärkungsfaktor < 100...500 kann ein Chopperverstärker einstufig und damit besonders platz- und stromsparend aufgebaut werden.

Für langsame Analog/Digital-Wandler ADC mit hoher Auflösung eignen sich beispielsweise das "Sigma/Delta"-Verfahren, oder das "Charge-Balancing"-Verfahren. Da sehr viele Analog/Digital-Wandler ADC auf dem Sensorchip SP parallel arbeiten, ergibt sich im Vergleich zu herkömmlichen Thermopile Infrarot Sensorarrays mit nur einem Analog/Digital-Wandler ADC am Ausgang eine niedrige Wandelrate, was zu der geforderten niedrigen Verlustleistung und dem geringem Platzbedarf führt, wie das an einem 64x64 Sensorarray TPA erklärt werden kann.

Nach dem "Sigma/Delta"-Verfahren, bzw. dem "Charge-Balancing"-Verfahren arbeitende Analog/Digital-Wandler sind in der Fachwelt bekannte und übliche Wandler.

Ein nach dem Stand der Technik aufgebautes Sensorarray mit 64x64 Pixeln mit nur einem Analog/Digital-Wandler benötigt bei einer Bildrate von 15 Hz eine Wandelrate des Analog/Digital-Wandlers ADC von 64×64 Pixel × 15 Hz = 61.440 Hz.

Bei den gemäß der Erfindung parallel arbeitenden Analog/Digital-Wandlern ADC ist eine Wandelrate von lediglich 15 Hz (bei a = 1) oder 60 Hz (bei a = 4) erforderlich (a: Anzahl der gleichzeitig auszulesenden Pixel). Das ermöglicht die Realisierung von Analog/Digital-Wandlern ADC mit hoher Auflösung (z.B. 16 Bit und mehr) mit sehr geringem Strom- und Platzverbrauch.

Die digitalisierten Signale jedes Signalverarbeitungskanales K₁...K_{N} können in einem Speicherfeld eines Speichers RAM zwischengespeichert werden, bevor sie zum seriellen Ausgangs-Datenstrom eines I/O-Digitalports DIO weitergeschaltet werden. Dadurch kann das Zeitregime zum Auslesen der Daten über den Digitalport DIO so gewählt werden, dass die gesamte Zeit eines Bildes für die Integration und Tiefpassfilterung der Pixelsignale zur Verfügung steht.

Die Rauschbandbreite der Signalverarbeitungskanäle K₁...K_{N} sollte bevorzugt auf die minimal notwendige reduziert werden, die sich aus dem Produkt der Zahl der Pixel SE pro Signalverarbeitungskanal K₁...K_{N} und der Bildfrequenz des Sensorarrays TPA (frame rate) ergibt.

Das kann einfach dadurch realisiert werden, dass vor dem Analog/Digital-Wandler ADC ein Tiefpassfilter TPF integriert wird, was beispielsweise als Teil des Vorverstärkers W, oder als zusätzlicher Tiefpassfilter TPF möglich ist.

In den Fig. 3 und Fig. 4b ist eine besonders Platz sparende Variante dargestellt, bei der die Reduzierung der Rauschbandbreite in besonders bevorzugter Weise durch das Integratorverhalten eines geeigneten Analog/Digital-Wandlers ADC, z.B. eines nach dem Charge Balancing Verfahren arbeitenden Analog/Digital-Wandlers ADC, erreicht wird.

Mit der vorstehend beschriebenen neuen Signalverarbeitung wird eine deutliche Verbesserung der Performance insgesamt erreicht.

Das Rauschen nimmt im Falle von weißem Rauschen bekanntlich mit der Wurzel der Signal- bzw. Rausch-Bandbreite des Vorverstärkers W zu. Bei der Verwendung eines 64 × 64 Sensorarrays nach dem Stand der Technik würde die Rauschbandbreite um das 64×64-fache der Bildrate (frame rate) bei nur einem Vorverstärker W zunehmen und immer noch um das 64-fache bei einem Signalverstärker pro Spalte.

Folglich würde das Gesamtrauschen und die Temperaturauflösung eines 64×64 Sensorarrays mit einem Vorverstärker W um das 64-fache und bei 64 Spaltenverstärkern immer noch um etwa das 8-fache höher liegen, als bei einem Array, bei dem jedes Pixel einen eigenen Signalkanal hat.

Damit kann beispielsweise ein erfindungsgemäßes 64×64 Sensorarray TPA ein bis zu 8-fach höheres thermisches Auflösungsvermögen erreichen als bekannte, nach dem Stand der Technik aufgebautes Sensorarrays. Nach gleicher Betrachtungsweise ergibt sich eine mögliche Verbesserung des thermischen Auflösungsvermögens um das 4-fache bei einem erfindungsgemäßen 16×16 Sensorarray TPA, um das 5,5-fache bei einem 32×32 Sensorarray TPA und um das 11-fache bei einem 128×128 Sensorarray TPA.

Würde bei einem 128×128 Sensorarray TPA die Zahl der Signalverarbeitungskanäle reduziert und würden sich z.B. a = 16 Pixel einen Signalverarbeitungskanal teilen, würde statt einer 11-fachen Verbesserung des thermischen Auflösungsvermögens immer noch eine 3-fache Verbesserung des Signal/Rausch-Abstandes gegenüber der WO 2006/122529 A1 und gegenüber dem sonstigen Stand der Technik mit nur einem Signalübertragungskanal um das 32-fache erreicht werden.

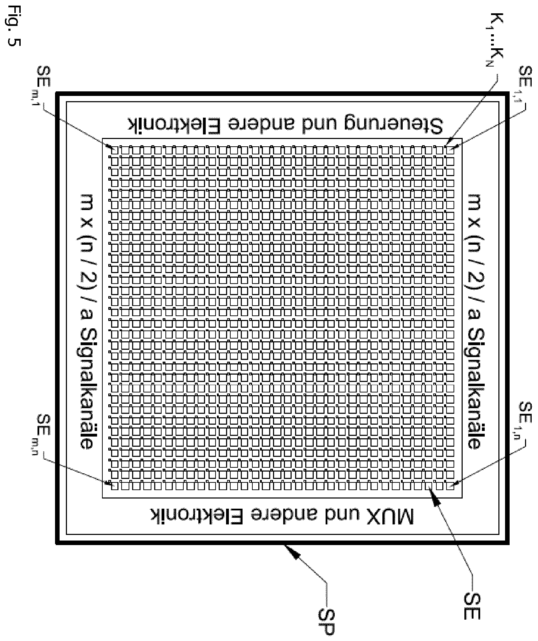

Die erfindungsgemäß gestalteten Signalverarbeitungskanäle K₁...K_{N} können sowohl im Randbereich der einzelnen Pixel SE, wie in Fig. 5 dargestellt, im peripheren Randbereich des Sensorchips SP, d.h. außerhalb der Pixel, oder auf beiden Gebieten verteilt, angeordnet werden.

Um eine gute thermische Balance und damit ein homogenes Thermobild über den gesamten Sensorchip SP zu erreichen, sollten die Verlustleistungen der verschiedenen Baugruppen möglichst homogen und symmetrisch auf dem Sensorchip SP verteilt sein.

Neben den eigentlichen Signalverarbeitungskanälen K₁...K_{N} und den Multiplexern MUX können weitere Elektronikkomponenten mit auf dem Sensorchip integriert und über die Multiplexer MUX auf die digitale Schnittstelle geschaltet werden (vgl. Fig. 1 und Fig. 5). Diese weiteren Elektronikkomponenten können Temperaturreferenzen, Spannungsreferenzen, Speichermittel (z.B. EEPROMs zur Speicherung von Kalibrierdaten), gegebenenfalls auch kleine µController, z.B. zur weiteren Signalaufbereitung oder Temperaturberechnung, sein.

Weiterhin kann es von Vorteil sein, dass Zusatzinformationen REF/PTAT oder die auf dem Chip selbst gemessene Drainspannung VDD, wie beispielsweise die Signale von Bildpixeln oder Bildelementen, die über denselben Signalverarbeitungskanal mit dem seriellen Datenstrom eingefügt werden, um Drifteffekte zu kompensieren und dadurch die Messgenauigkeit zu erhöhen.

Die Einstellung der für die jeweilige Bildrate günstigsten Rauschbandbreite kann bei der Nutzung eines integrierenden Analog/Digital-Wandlers ADC über den intern erzeugten Muttertakt und die durch das Taktregime vorgegebene Wandelrate vorgegeben werden.

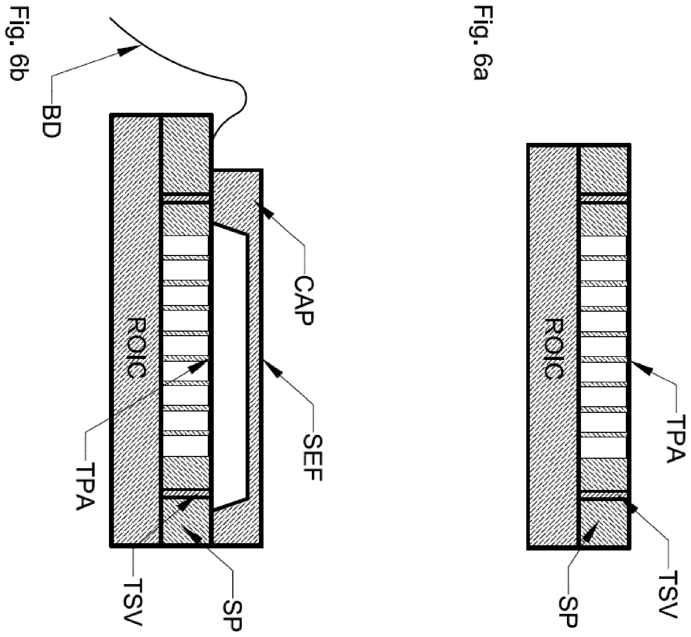

Der Vollständigkeit halber sei erwähnt, dass die Signalverarbeitungskanäle K₁...K_{N} auch auf einem separaten Chip ROIC, unterhalb des eigentlichen Sensorchips SP angeordnet sein können (Fig. 6a, 6b).

Fig. 6a zeigt eine schematische Schnittdarstellung eines Sensorchips SP mit Durchkontaktierungen TSV und einem unter diesem angeordneten separaten Chip ROIC mit in diesem integrierten Signalverarbeitungskanälen K₁...K_{N} und der weiteren Speicher- und Signalverarbeitungs-Elektronik wie vorstehend beschrieben. Die Durchkontaktierungen TSV sind mit einem leitfähigen Material gefüllte Durchgangsöffnungen durch den Sensorchip SP, die gegenüber dem Sensorchip SP isoliert sind und die an den Enden jeweils mit nicht dargestellten Leitbahnen auf dem Sensorchip SP bzw. dem separaten Chip ROIC verbunden sind. Es versteht sich, dass auch zwischen dem Sensorchip SP und dem separaten Chip RIOC eine mechanisch feste Verbindung bestehen muss.

Aus Fig. 6b geht die gleiche Anordnung wie in Fig. 6a hervor, jedoch ergänzt mit einem Abdeckwafer CAP auf dem Sensorchip SP mit einem Strahlungseintrittsfenster SEF. Das Abdeckwafer CAP kann insgesamt aus einem für Infrarot durchlässigen Material bestehen, oder lediglich einen derartigen Bereich über dem Sensorarray TPA aufweisen. Weiterhin können zusätzliche elektrische Verbindungsmittel, wie Bonddrähte BD zur Verbindung des Sensorchips SP mit weiteren Funktionsbaugruppen auf einer Leiterplatte o.dgl. die zum Betrieb des Thermopile Infrarot Sensorarrays TPA benötigt werden, vorgesehen sein.

Anstelle der Durchkontaktierungen TSV zur elektrischen Verbindung zwischen Sensorchip SP und dem separatem Chip ROIC kommen auch Umverdrahtungen in Betracht, bei denen Leitbahnen um den Seitenrand vom Sensorchip SP zum separaten Chip ROIC geführt werden.

### Bezugszeichenliste

- TPA: Sensorarray
- VV: Vorverstärker
- TPF: Tiefpassfilter
- ADC: Analog/Digital-Wandler
- K₁...K_{N}: Signalverarbeitungskanal
- SE: Pixel
- SP: Sensorchip
- RAM: Speicherfeld
- CRTL: Steuerschaltung
- DIO: Digitalport
- CLK: Taktgeber
- VREF: Referenzspannung
- VDD: Drainspannung
- VSS: Sourcespannung
- MUX: Multiplexer
- REF/PTAT: Temperaturreferenz
- a: Anzahl Pixel pro Signalverarbeitungskanal
- TSV: Durchkontaktierung
- ROIC: separates Chip
- CAP: Abdeckwafer
- SEF: Strahlungseintrittsfenster
- BD: Bonddraht

## Patentansprüche

1. Hochauflösendes Thermopile Infrarot Sensorarray mit mindestens 16 Zeilen und 16 Spalten und monolithisch integrierter Signalverarbeitung auf einem Sensorchip (SP), mit mehreren parallelen Signalverarbeitungskanälen (K₁...K_{N}) für die Signale des Sensorarrays (TPA), sowie einem Digitalport (DIO) zur seriellen Ausgabe der Signale der Pixel (SE), wobei jeder Signalverarbeitungskanal (K₁...K_{N}) mindestens einen integrierenden Analog/Digital-Wandler (ADC) aufweist, in dem ein Tiefpassfilter (TPF) integriert ist, wobei für jeden Signalverarbeitungskanal (K₁...K_{N}) ein Speicherbereich in einem Speicher zur Speicherung der Ergebnisse der Analog/digital-Wandler (ADC) vorhanden ist, wobei sich bei dem Sensorarray (TPA) höchstens 16 Pixel (SE) einen Signalverarbeitungskanal (K₁...K_{N}) teilen, wobei die Anzahl der Signalverarbeitungskanäle (K₁...K_{N}) mindestens dem 4-fachen der Anzahl der Zeilen entspricht, wobei ein Teil der Signalverarbeitungskanäle (K₁...K_{N}) jeweils im Zwischenraum zwischen den Pixeln (SE) und ein weiterer Teil der Signalverarbeitungskanäle (K₁...K_{N}) zusammen mit weiterer Elektronik in dem das Sensorarray (TPA) umgebenden äußeren Randbereich des Sensorchips (SP), oder unter demselben Sensorchip (SP) angeordnet ist, wobei für jeden Signalverarbeitungskanal (K₁...K_{N}) mit einer Anzahl a von Pixeln (SE) von a > 1 ein Signalmultiplexer (MUX) zur Auswahl der dem Signalverarbeitungskanal (K₁...K_{N}) zugeordneten Pixel (SE) des Sensorarrays (TPA) vorhanden ist, wobei jedem Analog/Digital-Wandler (ADC) ein Vorverstärker (W) mit einem Verstärkungsfaktor mit weniger als 500-fach vorgeschaltet ist, wobei der Vorverstärker (W) ein Auto-Zero oder switched Chopper Verstärker ist, wobei der Analog/Digital-Wandler (ADC) eine Auflösung von mindestens 10 Bit besitzt und mit einer Wandelrate von 15 - 60 Hz arbeitet, wobei die Tiefpassfilter (TPF) zur Begrenzung der Rauschbandbreite mit einer Grenzfrequenz arbeiten, die höchstens dem achtfachen Betrag des Produktes aus Bildrate des Sensorarrays (TPA) und der Anzahl a der Pixel pro Signalverarbeitungskanal (K₁...K_{N}) entspricht und wobei der Mittenabstand der Pixel (SE) kleiner als 100 µm beträgt.

2. Hochauflösendes Thermopile Infrarot Sensorarray nach Anspruch 1, **dadurch gekennzeichnet, dass** der Analog/Digital-Wandler (ADC) nach dem Charge Balancing oder Delta-Sigma Verfahren arbeitet.

3. Hochauflösendes Thermopile Infrarot Sensorarray nach Anspruch 1, **dadurch gekennzeichnet, dass** jeder Signalverarbeitungskanal (K₁...K_{N}) einen Tiefpassfilter (TPF) zur Begrenzung der Rauschbandbreite enthält, dessen Grenzfrequenz mindestens dem Produkt aus der Bildrate des Thermopile Infrarot Sensorarray (TPA) und der Anzahl a der Pixel (SE) pro Signalverarbeitungskanal (K₁...K_{N}), bevorzugt weniger als dem dreifachen Betrag des Produktes, entspricht.

4. Hochauflösendes Thermopile Infrarot Sensorarray nach einem der vorgenannten Ansprüche 1 bis 3, **dadurch gekennzeichnet, dass** ein Teil der Signalverarbeitungskanäle (K₁...K_{N}) unterhalb des Sensorchips (SP) mit den Sensorelementen (SE) auf einem separaten Chip angeordnet ist, wobei der Thermopile Infrarot Sensorchip (SP) und der separate Chip (ROIC) fest miteinander verbunden sind.

## Claims

1. High-resolution thermopile infrared sensor array having at least 16 rows and 16 columns and monolithically integrated signal processing on a sensor chip (SP), comprising a plurality of parallel signal processing channels (K₁...K_{N}) for the signals of the sensor array (TPA), and a digital port (DIO) for serial output of the signals of the pixels (SE), wherein each signal processing channel (K₁...K_{N}) has at least one integrated analogue-to-digital converter (ADC) with an integrated low-pass filter (TPF), wherein there is a memory area in a memory for storing the results from the analogue-to-digital converters (ADC) for each signal processing channel (K₁...K_{N}), wherein no more than 16 pixels (SE) of the sensor array (TPA) share a signal processing channel (K₁...K_{N}), wherein the number of signal processing channels (K₁...K_{N}) corresponds to at least 4-times the number of rows, wherein one portion of the signal processing channels (K₁...K_{N}) is in each case arranged in the interstice between the pixels (SE) and a further portion of the signal processing channels (K₁...K_{N}) is arranged together with further electronics in the outer edge region of the sensor chip (SP) that surrounds the sensor array (TPA), or below the same sensor chip (SP), wherein a signal multiplexer (MUX) for selecting the pixels (SE) of the sensor array (TPA) assigned to the signal processing channel (K₁...K_{N}) is present for each signal processing channel (K₁...K_{N}) with a number a of pixels (SE) with a > 1, wherein a preamplifier (W) with a gain factor of less than 500-times is disposed upstream of each analogue-to-digital converter (ADC), wherein the preamplifier (W) is an auto-zero or switched chopper amplifier, wherein the analogue-to-digital converter (ADC) has a resolution of at least 10 bits and operates with a conversion rate of 15-60 Hz, wherein the low-pass filters (TPF) operate with a cut-off frequency which is no more than eight times the absolute value of the product of frame rate of the sensor array (TPA) and the number a of pixels per signal processing channel (K₁...K_{N}) for the purposes of limiting the noise bandwidth, and wherein the mean spacing of the pixels (SE) is less than 100 µm.

2. High-resolution thermopile infrared sensor array according to Claim 1, **characterized in that** the analogue-to-digital converter (ADC) operates according to the charge balancing or delta-sigma method.

3. High-resolution thermopile infrared sensor array according to Claim 1, **characterized in that** each signal processing channel (K₁...K_{N}) contains a low-pass filter (TPF) for limiting the noise bandwidth, the cut-off frequency of which is at least the product of the frame rate of the thermopile infrared sensor array (TPA) and the number a of pixels (SE) per signal processing channel (K₁...K_{N}), and preferably less than three times the absolute value of said product.

4. High-resolution thermopile infrared sensor array according to any one of preceding Claims 1 to 3, **characterized in that** a portion of the signal processing channels (K₁...K_{N}) is arranged below the sensor chip (SP) with the sensor elements (SE) on a separate chip, with the thermopile infrared sensor chip (SP) and the separate chip (ROIC) being securely connected to one another.

## Revendications

1. Réseau de capteurs infrarouges à thermopile à haute résolution, comprenant au moins 16 lignes et 16 colonnes et un traitement de signal intégré de manière monolithique sur une puce de capteur (SP), plusieurs canaux de traitement de signal parallèles (K₁...K_{N}) pour les signaux du réseau de capteurs (TPA), ainsi qu'un port numérique (DIO) pour la sortie série des signaux des pixels (SE), dans lequel chaque canal de traitement de signal (K₁...K_{N}) présente au moins un convertisseur analogique/numérique d'intégration (ADC) dans lequel est intégré un filtre passe-bas (TPF), dans lequel il existe pour chaque canal de traitement de signal (K₁...K_{N}) une zone de mémoire dans une mémoire pour mémoriser les résultats du convertisseur analogique/numérique (ADC), dans lequel, dans le réseau de capteurs (TPA) au maximum 16 pixels (SE) se partagent un canal de traitement de signal (K₁...K_{N}), le nombre des canaux de traitement de signal (K₁...K_{N}) correspondant au moins à 4 fois le nombre des lignes, dans lequel une partie des canaux de traitement de signal (K₁...K_{N}) est disposée respectivement dans l'espace entre les pixels (SE), et une autre partie des canaux de traitement de signal (K₁...K_{N}) est disposée avec une autre électronique dans la zone marginale extérieure, entourant le réseau de capteurs (TPA), de la puce de capteur (SP), ou est disposée sous ladite puce de capteur (SP), dans lequel, pour chaque canal de traitement de signal (K₁...K_{N}) ayant un nombre a de pixels (SE), avec a > 1, il existe un multiplexeur de signaux (MUX) pour la sélection des pixels (SE) du réseau de capteurs (TPA) associés au canal de traitement de signal (K₁...K_{N}), dans lequel un préamplificateur (W) ayant un facteur d'amplification de moins de 500 fois est placé en amont de chaque convertisseur analogique/numérique (ADC), le préamplificateur (VV) étant un amplificateur à zéro automatique ou à découpage commuté, dans lequel le convertisseur analogique/numérique (ADC) présente une résolution d'au moins 10 bits et fonctionne avec un taux de conversion de 15 à 60 Hz, dans lequel, pour la limitation de la largeur de bande de bruit, les filtres passe-bas (TPF) fonctionnent à une fréquence de coupure qui correspond au maximum à huit fois le montant du produit de la fréquence d'images du réseau de capteurs (TPA) et du nombre a des pixels par canal de traitement de signal (K₁...K_{N}), et dans lequel la distance de centre à centre des pixels (SE) est inférieure à 100 µm.

2. Réseau de capteurs infrarouges à thermopile à haute résolution selon la revendication 1, **caractérisé en ce que** le convertisseur analogique/numérique (ADC) fonctionne selon le procédé d'équilibrage de charge ou le procédé delta-sigma.

3. Réseau de capteurs infrarouges à thermopile à haute résolution selon la revendication 1, **caractérisé en ce que** chaque canal de traitement de signal (K₁...K_{N}), pour la limitation de la largeur de bande de bruit, comporte un filtre passe-bas (TPF) dont la fréquence de coupure correspond au moins au produit de la fréquence d'images du réseau de capteurs infrarouges à thermopile (TPA) et au nombre a des pixels (SE) par canal de traitement de signal (K₁...K_{N}), de préférence à moins de trois fois le montant du produit.

4. Réseau de capteurs infrarouges à thermopile à haute résolution selon l'une quelconque des revendications précédentes 1 à 3, **caractérisé en ce qu'**une partie des canaux de traitement de signal (K₁...K_{N}) est disposée au-dessous de la puce de capteur (SP) avec les éléments capteurs (SE) sur une puce séparée, la puce de capteur (SP) infrarouge à thermopile et la puce séparée (ROIC) étant reliées solidement l'une à l'autre.
